# EUROPÄISCHE PATENTSCHRIFT

(11) **EP 3 142 886 B1**
(45) Veröffentlichungstag und Bekanntmachung des Hinweises auf die Patenterteilung: **11.11.2020**
(21) Anmeldenummer: 15727549.6
(22) Anmeldetag: 11.05.2015
(51) Int. Cl.: B60K 6/10, B60K 6/20, B60K 6/365

(54) **HYBRIDFAHRZEUG**
HYBRID VEHICLE
VÉHICULE HYBRIDE

(30) Priorität: 15.05.2014 DE 102014007091
(43) Veröffentlichungstag der Anmeldung: 22.03.2017
(73) Patentinhaber: Audi AG, 85045 Ingolstadt (DE)
(72) Erfinder: DAWIDZIAK, Johannes, 97950 Grossrinderfeld (DE)
(74) Vertreter: Askaryar, Jama
(86) Internationale Anmeldenummer: PCT/EP2015/000966
(87) Internationale Veröffentlichungsnummer: WO 2015/172878

(56) Entgegenhaltungen:
- WO-A1-2009/010819
- WO-A2-2007/138353
- DE-A1-102011 115 281

## Beschreibung

Die Erfindung betrifft ein Hybridfahrzeug, umfassend: einen Verbrennungsmotor mit einer Antriebswelle zum Antreiben der Räder wenigstens einer Achse, wenigstens eine erste elektrische Maschine zum Antreiben der Räder dieser oder wenigstens einer weiteren Achse, wobei die wenigstens eine erste elektrische Maschine bei einem Bremsvorgang als Generator und bei einem Beschleunigungsvorgang als Motor betreibbar ist und einen einen Rotor aufweisenden Schwungradspeicher, der bei einem Bremsvorgang aufladbar und bei einem Beschleunigungsvorgang entladbar ist.

In der DE 10 2010 007 632 A1 ist ein Hybridfahrzeug vorgeschlagen worden, das einen die Hinterachse antreibenden Verbrennungsmotor und zwei an der Vorderachse angebrachte elektrische Maschinen aufweist. Die elektrischen Maschinen können während eines Bremsvorgangs als Generator betrieben werden, um Bewegungsenergie zurückzugewinnen. Die im Rahmen der Rekuperation umgewandelte Energie wird einem als Energiespeicher dienenden Schwungrad zugeführt. Dazu wird von den an der Vorderachse angeordneten elektrischen Maschinen Strom erzeugt, der einer dritten elektrischen Maschine, die in oder an dem Schwungradspeicher angeordnet ist, zugeführt wird, um einen Rotor des Schwungradspeichers in Bewegung zu versetzen. Der Rotor dient als mechanischer Energiespeicher, so dass keine elektrochemische Speicherbatterie erforderlich ist. Im Anschluss an einen Bremsvorgang steht die in Form von Bewegungsenergie gespeicherte rekuperierte Energie für einen Beschleunigungsvorgang zur Verfügung. Dazu wird die dritte elektrische Maschine des Schwungradspeichers als Generator betrieben, wodurch unter Verlangsamung des Rotors elektrische Energie erzeugt wird, die wiederum der ersten und der zweiten elektrischen Maschine an der Vorderachse zugeführt wird. Diese elektrische Energie wirkt als zusätzliche Antriebsenergie, die den die Hinterachse antreibenden Verbrennungsmotor unterstützt.

Um den Wirkungsgrad und die Regelbarkeit zu verbessern, wird bei Hybridfahrzeugen häufig ein elektrisches Getriebe mit wenigstens einer elektrischen Maschine oder ein CVT-Getriebe (continuously variable transmission) eingesetzt. Sowohl das elektrische Getriebe als auch das CVT-Getriebe führen bei einer hohen zu übertragenen Leistung jedoch zu einem hohen Systemgewicht. Daher kann lediglich ein gewisser Anteil der tatsächlich vorhandenen Bremsenergie in Bewegungsenergie umgewandelt werden. Ein Grund dafür ist, dass die für die Rekuperation zur Verfügung stehende Zeit, das heißt die Dauer eines Bremsvorgangs, üblicherweise kürzer bzw. wesentlich kürzer als eine Beschleunigungsphase ist. Dementsprechend muss eine elektrische Maschine, die zur Rekuperation von Bremsenergie eingesetzt wird, in Abhängigkeit der während eines Bremsvorgangs auftretenden Leistung dimensioniert werden. Die Folge ist, dass ein großer Teil der Bremsenergie auch bei einer rekuperativ betreibbaren elektrischen Maschine ungenutzt als Wärme verloren geht. Dies ist besonders nachteilig, da viele Fahrzeuge so betrieben werden, dass sie häufig abgebremst und wieder beschleunigt werden.

In der DE 10 2011 115 281 A1 ist bereits ein verbessertes Hybridfahrzeug vorgeschlagen worden, bei dem ein größerer Anteil der Bremsenergie rekuperiert und gespeichert werden kann. Dazu ist bei dem dort beschriebenen Hybridfahrzeug vorgesehen, dass der Rotor über wenigstens eine schaltbare Kupplung mechanisch mit der Antriebswelle der wenigstens einen vom Verbrennungsmotor antreibbaren Achse koppelbar ist. Allerdings weist ein derartiges Hybridfahrzeug den Nachteil auf, dass die zwischen dem Schwungradspeicher und dem Verbrennungsmotor angeordnete Kupplung der Leistungsübertragung dient. Aufgrund des in den meisten Betriebszuständen vorhandenen Drehzahlunterschieds zwischen dem Schwungradspeicher und dem Verbrennungsmotor bzw. dessen Kurbelwelle bzw. den Antriebswellen wird die schaltbare Kupplung überwiegend im Schlupfbetrieb betrieben. Das bedeutet, dass ein beträchtlicher Teil der zwischen dem Schwungmassenspeicher und dem Verbrennungsmotor übertragenen Energie aufgrund der unterschiedlichen Drehzahlen in Reibung umgewandelt wird, so dass diese Energie als nicht nutzbare Wärme verloren geht. Zusätzlich ist mit einem erhöhten Verschleiß der Kupplung zu rechnen, insgesamt kann die Leistungsübertragung zwischen dem Schwungradspeicher und dem Verbrennungsmotor nur mit einem schlechten Wirkungsgrad stattfinden.

Aus WO 2007/138 353 A ist ein regeneratives Bremssystem bekannt, bei dem ein Schwungradspeicher vorgesehen ist, um rekuperierte Energie zu speichern.

Weiterhin ist aus WO 2009/010 819 A ein Antriebsstrang für ein Fahrzeug mit einer Brennkraftmaschine, einem Schwungradspeicher und einer elektrischen Maschine bekannt, umfassend ein Planetengetriebe, das der Leistungsverzweigung dient.

Der Erfindung liegt daher die Aufgabe zugrunde, ein Hybridfahrzeug anzugeben, das eine Leistungsübertragung zwischen dem Schwungradspeicher und dem Verbrennungsmotor mit einem besseren Wirkungsgrad ermöglicht.

Zur Lösung dieser Aufgabe ist ein Hybridfahrzeug gemäß Patentanspruch 1 vorgesehen.

Der Erfindung liegt die Erkenntnis zugrunde, dass der Wirkungsgrad der Leistungsübertragung zwischen dem Schwungradspeicher und dem Verbrennungsmotor erhöht werden kann, indem zwischen dem Schwungradspeicher und dem Verbrennungsmotor ein Planetengetriebe angeordnet ist. Dasselbe gilt für eine Anordnung, bei der der Verbrennungsmotor mit einem Getriebe verbunden ist. In diesem Fall kann das Planetengetriebe zwischen dem mit dem Verbrennungsmotor verbundenen Getriebe und dem Schwungradspeicher angeordnet sein. Alternativ kann das Planetengetriebe zwischen dem Schwungradspeicher und einer Achse des Hybridfahrzeugs angeordnet sein.

Mittels des Planetengetriebes kann eine Anpassung der unterschiedlichen Drehzahlen des Schwungradspeichers und des Verbrennungsmotors bzw. dessen Kurbelwelle erfolgen, wodurch eine schlupffreie Leistungsübertragung möglich ist, dadurch erhöht sich der Wirkungsgrad des Hybridfahrzeugs.

Um den Wirkungsgrad noch weiter zu erhöhen, ist es bei dem erfindungsgemäßen Hybridfahrzeug vorgesehen sein, dass das Planetengetriebe mit einer zweiten elektrischen Maschine gekoppelt ist. Diese zweite elektrische Maschine kann mit einer Komponente des Planetengetriebes gekoppelt sein, um diese Komponente abzubremsen oder zu beschleunigen. Die zweite elektrische Maschine ist derart betreibbar, dass die Drehzahl des Schwungradspeichers und die Drehzahl des Verbrennungsmotors mittels des Planetengetriebes aneinander anpassbar sind. Die zweite elektrische Maschine kann dabei beispielsweise so betrieben werden, dass eine Komponente des Planetengetriebes abgebremst oder beschleunigt wird, wodurch ein Drehzahlunterschied zwischen dem Schwungradspeicher und dem Verbrennungsmotor verringert wird, im Optimalfall kann ein Drehzahlunterschied vollkommen eliminiert werden. Insbesondere kann die zweite elektrische Maschine auch ein Abstützmoment liefern, wenn die in dem Schwungradspeicher gespeicherte Energie über das Planetengetriebe an den Verbrennungsmotor übertragen wird. Wenn die zweite elektrische Maschine in diesem Zustand als Motor betrieben wird, kann die Drehzahl des Planetengetriebes in der gewünschten Weise beeinflusst werden, so dass eine schlupffreie und reibungsarme Leistungsübertragung möglich ist.

Bei dem erfindungsgemäßen Hybridfahrzeug wird es bevorzugt, dass der Schwungradspeicher wenigstens eine mit der wenigstens einen ersten elektrischen Maschine gekoppelte dritten elektrische Maschine aufweist.

Bei dem erfindungsgemäßen Hybridfahrzeug kann das Planetengetriebe die Komponenten Hohlrad, Planetenträger und Sonnenrad besitzen, wobei eine Komponente mit dem Verbrennungsmotor oder dem damit verbundenen Getriebe, eine weitere Komponente mit dem Schwungradspeicher und die dritte Komponente mit der zweiten elektrischen Maschine gekoppelt ist. Das Hohlrad, der Planetenträger und das Sonnenrad können dabei als rotatorische Freiheitsgrade betrachtet werden, von denen einer mit dem Verbrennungsmotor, ein weiterer mit dem Schwungmassenspeicher und der dritte mit der zweiten elektrischen Maschine gekoppelt wird.

Eine weitere Ausgestaltung der Erfindung kann vorsehen, dass zwischen dem Schwungradspeicher und dem Verbrennungsmotor oder dem mit dem Verbrennungsmotor verbundenen Getriebe ein erster Leistungspfad zum Übertragen mechanischer Leistung und zwischen der mit dem Planetengetriebe verbundenen zweiten elektrischen Maschine und dem Verbrennungsmotor oder dem mit dem Verbrennungsmotor verbundenen Getriebe ein zweiter Leistungspfad zum Übertragen elektrischer Leistung gebildet ist. Die Komponenten des Hybridfahrzeugs sind dabei so ausgelegt, dass der größte Teil der übertragenen Leistung über den ersten, mechanischen Leistungspfad übertragen wird, während der zweite, elektrische Leistungspfad primär zur Drehzahlanpassung und zum Erzeugen eines Abstützmoments dient. Auf diese Weise kann die Energieumwandlung zwischen dem Schwungradspeicher über das Planetengetriebe zum Verbrennungsmotor bzw. in umgekehrter Richtung effizient und mit einem hohen Wirkungsgrad erfolgen. Insgesamt kann auf diese Weise der Energieverbrauch des erfindungsgemäßen Hybridfahrzeugs verringert werden.

Optional kann der Schwungradspeicher des erfindungsgemäßen Hybridfahrzeugs in einem Gehäuse aufgenommen sein, das mittels einer Vakuumpumpe evakuierbar ist. Dieser luftdichte Abschluss verringert Strömungsverluste, die ansonsten auftreten würden.

Eine weitere Variante des erfindungsgemäßen Hybridfahrzeugs sieht vor, dass zwischen dem Schwungradspeicher und dem Planetengetriebe eine schaltbare Kupplung angeordnet ist. Diese schaltbare Kupplung kann in bestimmten Betriebszuständen betätigt werden, beispielsweise wenn der Schwungradspeicher seine Höchstdrehzahl erreicht hat oder wenn die Drehzahl des Schwungradspeichers geringer als die Drehzahl des Verbrennungsmotors ist.

Ferner betrifft die Erfindung ein Verfahren zum Betreiben eines Hybridfahrzeugs gemäß Patentanspruch 7.

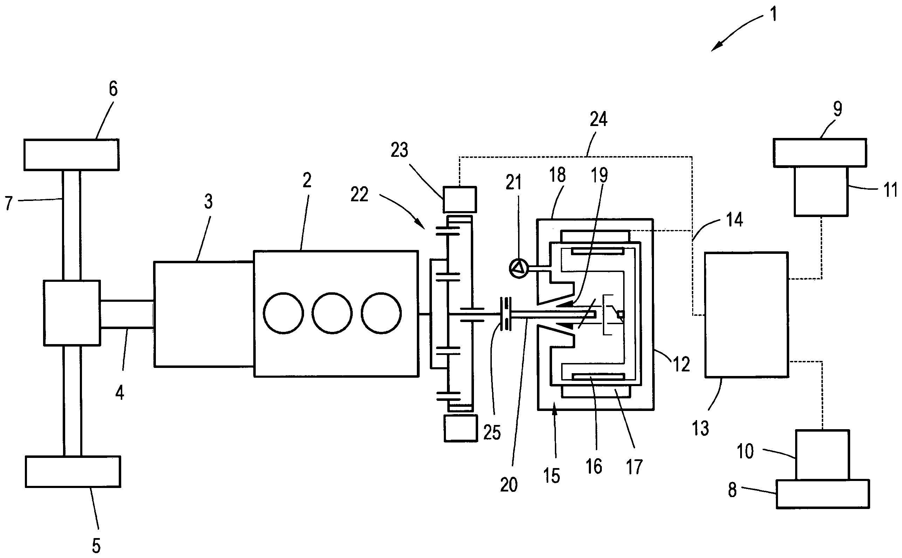

Weitere Vorteile und Einzelheiten der Erfindung werden nachfolgend anhand eines Ausführungsbeispiels unter Bezugnahme auf die Zeichnung erläutert.

Die einzige Zeichnung ist eine schematische Darstellung und zeigt die wesentlichen Komponenten eines erfindungsgemäßen Hybridfahrzeugs.

Das in der einzigen Figur gezeigte Hybridfahrzeug 1 umfasst einen Verbrennungsmotor 2, der mit einem Getriebe 3 verbunden ist. Über eine von dem Getriebe 3 angetriebene Welle 4 werden Räder 5, 6 einer ersten Achse 7 angetrieben.

Räder 8, 9 werden durch elektrische Maschinen 10, 11 angetrieben, diese werden nachfolgend als erste elektrische Maschinen bezeichnet. Bei einem Bremsvorgang sind die elektrischen Maschinen 10, 11 als Generator betreibbar. Durch die sich drehenden Räder 8, 9 wird beim generatorischen Betrieb eine Spannung erzeugt, wobei Bewegungsenergie in elektrischen Strom umgewandelt wird. Der erzeugte elektrische Strom dient zum Aufladen eines Schwungradspeichers 12. Bei einem Bremsvorgang steuert eine Leistungselektronik 13 die elektrischen Maschinen 10, 11. Die während des Bremsvorgangs in elektrische Energie umgewandelte Bewegungsenergie wird über eine Leitung 14 einer elektrischen Maschine 15 des Schwungradspeichers 12 zugeführt, wodurch ein Rotor 16 des Schwungradspeichers 12 beschleunigt wird. Die elektrische Maschine 15 des Schwungradspeichers 12 wird nachfolgend als dritte elektrische Maschine bezeichnet. Selbstverständlich ist die Leistungselektronik 13 über entsprechende Leitungen auch mit den elektrischen Maschinen 10, 11 verbunden.

Der Schwungradspeicher 12 umfasst den Rotor 16 und einen Stator 17. Gemeinsam bilden Rotor 16 und Stator 17 die dritte elektrische Maschine 15, die entweder als Generator oder als Motor betreibbar ist.

Der Schwungradspeicher 12 ist in einem Gehäuse 18 angeordnet, das mittels einer Dichtung 19 abdichtbar ist, die das Gehäuse 18 gegenüber einer Welle 20 abdichtet. Mittels einer Vakuumpumpe 21 kann das Innere des Gehäuses 18 im abgedichteten Zustand evakuiert werden, wodurch Strömungsverluste reduziert werden.

In der Figur erkennt man, dass die Welle 20 mit einem Planetensatz bzw. einem Planetengetriebe 22 verbunden ist, das an seiner gegenüberliegenden Axialseite mit dem Verbrennungsmotor 2 verbunden ist. Zusätzlich ist an dem Planetengetriebe 22 eine zweite elektrische Maschine 23 angebracht, das heißt, das Planetengetriebe 22 und die zweite elektrische Maschine 23 sind miteinander gekoppelt.

Das Planetengetriebe 22 umfasst ein Hohlrad, einen Planetenträger und ein Sonnenrad, wobei eine dieser drei Komponenten mit dem Verbrennungsmotor 2, eine weitere Komponente mit der Welle 20 und die letzte Komponente mit der zweite elektrischen Maschine 23 gekoppelt ist.

Während eines Bremsvorgangs des Hybridfahrzeugs 1 wird der Rotor 16 des Schwungradspeichers 12 über die Welle 20 und das Planetengetriebe 22 mit dem Verbrennungsmotor 2 gekoppelt. Im gekoppelten Zustand verringert sich während des Bremsvorgangs die Drehzahl des Verbrennungsmotors. Gleichzeitig wird der Rotor 16 während einer derartigen Rekuperationsphase beschleunigt, nur durch eine Drehzahlerhöhung kann dem Schwungrad Energie zugeführt werden, die als Bewegungsenergie gespeichert wird. Um einen eventuellen Drehzahlunterschied zwischen dem Verbrennungsmotor 2 bzw. dessen Kurbelwelle und der Welle 20 auszugleichen, kann zusätzlich die zweite elektrische Maschine 23 zur Drehzahlanpassung benutzt werden. Diese Drehzahlanpassung kann sowohl durch Beschleunigung des dazwischen geschalteten Planetengetriebes 22 als auch durch eine Abbremsung des Planetengetriebes 22 erfolgen. Währenddessen wird die zweite elektrische Maschine 23 über eine Leitung 24, über die sie mit der dritten elektrischen Maschine 15 in dem Schwungradspeicher 12 verbunden ist, mit elektrischer Energie versorgt. Durch die mittels der zweiten elektrischen Maschine vorgenommene Drehzahlanpassung kann eine schlupffreie Leistungsübertragung mit geringen Verlusten bewirkt werden.

Falls erforderlich kann der Schwungradspeicher 12 in bestimmten Betriebszuständen von dem Planetengetriebe 22 entkoppelt werden, dazu ist eine Kupplung 25 vorgesehen, diese ist allerdings optional und nicht unbedingt erforderlich.

Während eines Bremsvorgangs ist die Kupplung 25 geschlossen, so dass das Planetengetriebe 22 und der Rotor 16 des Schwungradspeichers 12 miteinander verbunden sind. Dementsprechend wird der Rotor 16 beschleunigt und gleichzeitig der Verbrennungsmotor 2 abgebremst, indem durch die dem Schwungradspeicher 12 zugeordnete zweite elektrische Maschine 23 ein Bremsmoment erzeugt wird. Die kinetische Energie der Räder 5, 6 der ersten Achse 7 wird dann mechanisch in kinetische Energie des Schwungradspeichers 12 umgewandelt, wobei zuvor durch das Getriebe 3 und das Planetengetriebe 22 eine Drehzahlwandlung stattfindet. Der Rotor 16 wird somit bei einem Bremsvorgang sowohl durch generatorischen Betrieb der ersten elektrischen Maschinen 10, 11 als auch mechanisch über die Welle 20 angetrieben. Dadurch kann dem Rotor 16 ein größerer Anteil der Bremsenergie zugeführt werden im Vergleich zu einem Hybridfahrzeug, bei dem lediglich die Bremsenergie einer Achse verwendet wird.

Zusätzlich erfolgt mittels der zweiten elektrischen Maschine 23, die mit dem Planetengetriebe 22 gekoppelt ist, eine Drehzahlanpassung, indem ein Abstützmoment erzeugt wird.

Das Hybridfahrzeug 1 umfasst somit einen ersten Leistungspfad zum Übertragen mechanischer Leistung, der sich zwischen dem Schwungradspeicher 12 und dem Verbrennungsmotor 2 befindet, sowie einen zweiten elektrischen Leistungspfad zum Übertragen elektrischer Leistung, der sich zwischen der zweiten elektrischen Maschine 23 und der dritten elektrischen Maschine 15 befindet.

Wenn das Hybridfahrzeug 1 beschleunigt werden soll, kann die in dem Rotor 16 gespeicherte kinetische Energie zum Antreiben der Welle 20 und damit des Verbrennungsmotors 2 genutzt werden. Bei geschlossener Kupplung 25 wird die zweite elektrische Maschine 23 so angesteuert, dass sie die Drehzahl des Planetengetriebes 22 anpasst, so dass die in dem Rotor 16 gespeicherte kinetische Energie ohne Schlupf zum Antreiben des Verbrennungsmotors bzw. der Räder 5, 6 genutzt werden kann.

## Patentansprüche

1. Hybridfahrzeug (1), umfassend:
- einen Verbrennungsmotor (2) mit einer Antriebswelle zum Antreiben der Räder (5, 6) wenigstens einer Achse (7),
- wenigstens eine erste elektrische Maschine (10, 11) zum Antreiben der Räder (8, 9) dieser oder wenigstens einer weiteren Achse, wobei die wenigstens eine erste elektrische Maschine (10, 11) bei einem Bremsvorgang als Generator und bei einem Beschleunigungsvorgang als Motor betreibbar ist,
- einen einen Rotor (16) aufweisenden Schwungradspeicher (12), der bei einem Bremsvorgang aufladbar und bei einem Beschleunigungsvorgang entladbar ist,
**dadurch gekennzeichnet,**
**dass** zwischen dem Schwungradspeicher (12) und dem Verbrennungsmotor (2) oder zwischen dem Schwungradspeicher (12) und einem mit dem Verbrennungsmotor (2) verbundenen Getriebe (3) oder zwischen dem Schwungradspeicher (12) und einer Achse des Hybridfahrzeugs ein Planetengetriebe (22) angeordnet ist, das mit einer zweiten elektrischen Maschine (23) gekoppelt ist wobei die zweite elektrische Maschine (23) dazu ausgebildet ist, die Drehzahl des Schwungradspeichers (12) und die Drehzahl des Verbrennungsmotors (2) über das Planetengetriebe (22) aneinander anzupassen.

2. Hybridfahrzeug nach Anspruch 1,
**dadurch gekennzeichnet,**
**dass** der Schwungradspeicher wenigstens eine mit der wenigstens einen ersten elektrischen Maschine (10, 11) gekoppelte dritte elektrische Maschine (15) aufweist.

3. Hybridfahrzeug nach Anspruch 1 oder 2,
**dadurch gekennzeichnet,**
**dass** das Planetengetriebe (22) die Komponenten Hohlrad, Planetenträger und Sonnenrad besitzt, die mit dem Verbrennungsmotor (2) oder dem damit verbundenen Getriebe (3), dem Schwungradspeicher (12) und der zweiten elektrischen Maschine (23) gekoppelt sind.

4. Hybridfahrzeug nach einem der vorangehenden Ansprüche,
**dadurch gekennzeichnet,**
**dass** zwischen dem Schwungradspeicher (12) und dem Verbrennungsmotor (2) oder dem mit dem Verbrennungsmotor (2) verbundenen Getriebe (3) ein erster Leistungspfad zum Übertragen mechanischer Leistung und zwischen der mit dem Planetengetriebe (22) verbundenen zweiten elektrischen Maschine (23) und dem Verbrennungsmotor (2) oder dem mit dem Verbrennungsmotor (2) verbundenen Getriebe (3) ein zweiter Leistungspfad zum Übertragen elektrischer Leistung gebildet ist.

5. Hybridfahrzeug nach einem der vorangehenden Ansprüche,
**dadurch gekennzeichnet,**
**dass** der Schwungradspeicher (12) in einem Gehäuse (18) aufgenommen ist, das mittels einer Vakuumpumpe (21) evakuierbar ist.

6. Hybridfahrzeug nach einem der vorangehenden Ansprüche,
**dadurch gekennzeichnet,**
**dass** zwischen dem Schwungradspeicher (12) und dem Planetengetriebe (22) eine schaltbare Kupplung (25) angeordnet ist.

7. Verfahren zum Betreiben eines Hybridfahrzeugs (1), umfassend einen Verbrennungsmotor (2) mit einer Antriebswelle zum Antreiben der Räder (5, 6) wenigstens einer Achse (7), wenigstens eine erste elektrische Maschine (10, 11) zum Antreiben der Räder (8, 9) dieser oder wenigstens einer weiteren Achse, wobei die wenigstens eine erste elektrische Maschine (10, 11) bei einem Bremsvorgang als Generator und bei einem Beschleunigungsvorgang als Motor betrieben wird, einen einen Rotor (16) aufweisenden Schwungradspeicher (12), der bei einem Bremsvorgang aufgeladen und bei einem Beschleunigungsvorgang entladen wird,
**dadurch gekennzeichnet,**
**dass** zwischen dem Schwungradspeicher (12) und dem Verbrennungsmotor (2) oder zwischen dem Schwungradspeicher (12) und einem mit dem Verbrennungsmotor (2) verbundenen Getriebe (3) oder zwischen dem Schwungradspeicher (12) und einer Achse des Hybridfahrzeugs ein Planetengetriebe (22) angeordnet ist, das mit einer zweiten elektrischen Maschine (23) gekoppelt ist, wobei die zweite elektrische Maschine (23) derart betrieben wird, dass die Drehzahl des Schwungradspeichers (12) und die Drehzahl des Verbrennungsmotors (2) über das Planetengetriebe (22) aneinander angepasst werden.

## Claims

1. Hybrid vehicle (1), comprising:
- an internal combustion engine (2) with a drive shaft for driving the wheels (5, 6) of at least one axle (7),
- at least one first electric machine (10, 11) for driving the wheels (8, 9) of said axle or at least one further axle, wherein the at least one first electric machine (10, 11) can be operated as a generator during a braking process and as a motor during an acceleration process,
- a flywheel accumulator (12) which has a rotor (16) and can be charged during a braking process and discharged during an acceleration process,
**characterised in that**
a planetary gear (22) is arranged between the flywheel accumulator (12) and the internal combustion engine (2) or between the flywheel accumulator (12) and a gear (3) connected to the internal combustion engine (2) or between the flywheel accumulator (12) and an axle of the hybrid vehicle, which planetary gear is coupled to a second electric machine (23) and wherein the second electric machine (23) is designed to match the speed of the flywheel accumulator (12) and the speed of the internal combustion engine (2) to one another via the planetary gear (22).

2. Hybrid vehicle according to claim 1,
**characterised in that**
the flywheel accumulator has at least one third electric machine (15) coupled to the at least one first electric machine (10, 11).

3. Hybrid vehicle according to claim 1 or 2,
**characterised in that**
the planetary gear (22) has the components ring gear, planet carrier and sun gear, which are coupled to the internal combustion engine (2) or the gear (3) connected thereto, the flywheel accumulator (12) and the second electric machine (23).

4. Hybrid vehicle according to any of the preceding claims,
**characterised in that**
a first power path for transmitting mechanical power is formed between the flywheel accumulator (12) and the internal combustion engine (2) or the gear (3) connected to the internal combustion engine (2), and a second power path for transmitting electrical power is formed between the third electric machine (23) connected to the planetary gear (22) and the internal combustion engine (2) or the gear (3) connected to the internal combustion engine (2).

5. Hybrid vehicle according to any of the preceding claims,
**characterised in that**
the flywheel accumulator (12) is accommodated in a housing (18) which can be evacuated by means of a vacuum pump (21).

6. Hybrid vehicle according to any of the preceding claims,
**characterised in that**
a switchable clutch (25) is arranged between the flywheel accumulator (12) and the planetary gear (22).

7. Method for operating a hybrid vehicle (1) comprising an internal combustion engine (2) with a drive shaft for driving the wheels (5, 6) of at least one axle (7), at least one first electric machine (10, 11) for driving the wheels (8, 9) of said axle or at least one further axle, wherein the at least one first electric machine (10, 11) is operated as a generator during a braking process and as a motor during an acceleration process, a flywheel accumulator (12) which has a rotor (16) and is charged during a braking process and discharged during an acceleration process,
**characterised in that**
a planetary gear (22) is arranged between the flywheel accumulator (12) and the internal combustion engine (2) or between the flywheel accumulator (12) and a gear (3) connected to the internal combustion engine (2) or between the flywheel accumulator (12) and an axle of the hybrid vehicle, which planetary gear is coupled to a second electric machine (23), wherein the second electric machine (23) is operated in such a way that the speed of the flywheel accumulator (12) and the speed of the internal combustion engine (2) are matched to one another via the planetary gear (22).

## Revendications

1. Véhicule hybride (1) comprenant :
- un moteur à combustion (2) avec un arbre d'entraînement pour l'entraînement des roues (5, 6) d'au moins un essieu (7),
- au moins une première machine (10, 11) électrique pour l'entraînement des roues (8, 9) de cet ou d'au moins un autre essieu, dans lequel l'au moins une première machine (10, 11) électrique peut fonctionner pour un processus de freinage en tant que générateur et pour un processus d'accélération en tant que moteur,
- un accumulateur à volant d'inertie (12) présentant un rotor (16) qui peut être chargé pour un processus de freinage et déchargé pour un processus d'accélération,
**caractérisé en ce**
**qu'**un engrenage planétaire (22) est agencé entre l'accumulateur à volant d'inertie (12) et le moteur à combustion (2) ou entre l'accumulateur à volant d'inertie (12) et un engrenage (3) relié au moteur à combustion (2) ou entre l'accumulateur à volant d'inertie (12) et un essieu du véhicule automobile, lequel est couplé à une deuxième machine (23) électrique, dans lequel la deuxième machine (23) électrique est réalisée afin d'adapter la vitesse de rotation de l'accumulateur à volant d'inertie (12) et la vitesse de rotation du moteur à combustion (2) par le biais de l'engrenage planétaire (22) l'une à l'autre.

2. Véhicule hybride selon la revendication 1,
**caractérisé en ce**
**que** l'accumulateur à volant d'inertie présente au moins une troisième machine (15) électrique couplée à l'au moins une première machine (10, 11) électrique.

3. Véhicule hybride selon la revendication 1 ou 2,
**caractérisé en ce**
**que** l'engrenage planétaire (22) possède les composants roue creuse, support planétaire et roue solaire qui sont couplés au moteur à combustion (2) ou à l'engrenage (2) relié à celui-ci, l'accumulateur à volant d'inertie (12) et la deuxième machine (23) électrique.

4. Véhicule hybride selon l'une des revendications précédentes,
**caractérisé en ce**
**qu'**un premier trajet de puissance est formé entre l'accumulateur à volant d'inertie (12) et le moteur à combustion (2) ou l'engrenage (3) relié au moteur à combustion (2) pour la transmission de puissance mécanique et un second trajet de puissance est formé entre la deuxième machine (23) électrique reliée à l'engrenage planétaire (22) et le moteur à combustion (2) ou l'engrenage (3) relié au moteur à combustion (2) pour la transmission de puissance électrique.

5. Véhicule hybride selon l'une des revendications précédentes,
**caractérisé en ce**
**que** l'accumulateur à volant d'inertie (12) est reçu dans un boîtier (18) qui peut être évacué au moyen d'une pompe à vide.

6. Véhicule hybride selon l'une des revendications précédentes,
**caractérisé en ce**
**qu'**un embrayage (25) commutable est agencé entre l'accumulateur à volant d'inertie (12) et l'engrenage planétaire (22).

7. Procédé de fonctionnement d'un véhicule hybride (1), comprenant un moteur à combustion (2) avec un arbre d'entraînement pour l'entraînement des roues (5, 6) au moins d'un essieu (7), au moins une première machine (10, 11) électrique pour l'entraînement des roues (8, 9) de cet ou au moins un autre essieu, dans lequel l'au moins une première machine (10, 11) électrique fonctionne pour un processus de freinage en tant que générateur et pour un processus d'accélération en tant que moteur, un accumulateur à volant d'inertie (12) présentant un rotor (16) qui est chargé pour un processus de freinage et déchargé pour un processus d'accélération,
**caractérisé en ce**
**qu'**un engrenage planétaire (22) est agencé entre l'accumulateur à volant d'inertie (12) et le moteur à combustion (2) ou entre l'accumulateur à volant d'inertie (12) et un engrenage (3) relié au moteur à combustion (2) ou entre l'accumulateur à volant d'inertie (12) et un essieu du véhicule hybride, lequel est couplé à une deuxième machine (23) électrique, dans lequel la deuxième machine (23) électrique fonctionne de telle manière que la vitesse de rotation de l'accumulateur à volant d'inertie (12) et la vitesse de rotation du moteur à combustion (2) soient adaptées par le biais de l'engrenage planétaire (22) l'une à l'autre.
